# EUROPÄISCHE PATENTSCHRIFT

(11) **EP 1 325 078 B1**
(45) Veröffentlichungstag und Bekanntmachung des Hinweises auf die Patenterteilung: **08.03.2006**
(21) Anmeldenummer: 01969726.7
(22) Anmeldetag: 17.09.2001
(51) Int. Cl.: C08L 59/00

(54) **EINGEFÄRBTE POLYOXYMETHYLEN-FORMMASSEN UND DARAUS HERGESTELLTE FORMTEILE**
COLOURED POLYOXYMETHYLENE MOULDING COMPOUNDS AND MOULDED PARTS PRODUCED THEREFROM
MATIERES MOULABLES TEINTEES A BASE DE POLYOXYMETHYLENE ET PIECES MOULEES FABRIQUEES A PARTIR DE CES MATIERES

(30) Priorität: 26.09.2000 DE 10047488; 01.06.2001 DE 10126787
(43) Veröffentlichungstag der Anmeldung: 09.07.2003
(73) Patentinhaber: Ticona GmbH, 65451 Kelsterbach (DE)
(72) Erfinder: DISCH, Stefan, 61462 Königsstein (DE); REUSCHEL, Gerhard, 65835 Liederbach (DE); HOFMANN, Ernst, 63808 Haibach (DE); KURZ, Klaus, 65451 Kelsterbach (DE)
(86) Internationale Anmeldenummer: PCT/EP2001/010711
(87) Internationale Veröffentlichungsnummer: WO 2002/026885

(56) Entgegenhaltungen:
- EP-A- 0 498 620
- EP-A- 0 605 736
- DATABASE WPI Week 199608 Derwent Publications Ltd., London, GB; AN 1996-075095 XP002182397 & JP 07 331028 A (MITSUBISHI GAS CHEM CO INC), 19. Dezember 1995 (1995-12-19) in der Anmeldung erwähnt
- DATABASE WPI Week 199536 Derwent Publications Ltd., London, GB; AN 1995-273023 XP002182398 & JP 07 173368 A (MITSUBISHI GAS CHEM CO INC), 11. Juli 1995 (1995-07-11) in der Anmeldung erwähnt

## Beschreibung

Die vorliegende Erfindung betrifft eingefärbte Polyoxymethylen Formmassen, die zur Herstellung von farbigen Formteilen oder farbigen Extrudaten geeignet sind. Die damit hergestellten Produkte sind besonders stabil bei der Verarbeitung und zeichnen sich durch geringe Formaldehydemission, defektfreie Oberflächen und hohe Farbstabilität aus. Diese Anmeldung bezieht sich auf die deutschen Patentanmeldungen DE 10126787.8 und DE 10047488.8, auf die hiermit ausdrücklich verwiesen wird.

Seit ihrer Markteinführung vor etwa 40 Jahren haben sich Polyoxymethylene als äußerst nützliche technische Werkstoffe in vielen Anwendungen durchgesetzt. Besonders als Konstruktionswerkstoff im Automobilbau, in der Elektroindustrie und in der Medizintechnik findet POM breite Anwendung. Beispiele hierfür sind in den anwendungstechnischen Broschüren der POM-Hersteller zu finden. Dabei wird von

POM-Formmassen ein bestimmtes Niveau an mechanischen Eigenschaften wie Steifigkeit, Härte und Zähigkeit gefordert, das den Einsatz dieser Materialien für technische Bauteile wie Zahnräder, Hebel und viele andere erst möglich macht. Die in den Broschüren der Hersteller von POM-Copolymeren veröffentlichten Werte für die Streckspannung liegen zwischen 60 und 70 N/mm². Für den Zug-E-Modul von unmodifizierten Copolymeren findet man dort Werte zwischen 2400 und 3100 N/mm². Für die Bruchdehnung findet man Werte zwischen 10 und 30 %.

Aufgrund dieser vorteilhaften Eigenschaften von POM-Formmassen besteht das Bedürfnis, Polyoxymethylene auch für Sichtteile einzusetzen und für diese Materialien weitere Anwendungsfelder zu erschließen. Hierzu ist es oft erforderlich, das Material optisch, d.h. farblich anzupassen. Zu diesem Zweck werden den POM-Formmassen Farbmittel in Form von Pigmenten oder polymerlöslichen Farbstoffen beigemischt.

Es ist allgemein bekannt (Damm, W. und Herrmann, E., in Gächter, Müller; Plastic Additives, 3. Ausgabe 1989, S. 730), daß gerade POM besonders schwierig einzufärben ist. Die Empfindlichkeit dieses Materials gegen Fremdstoffe, besonders wenn diese säurehaltig sind oder saure Gruppen aufweisen, was bei Farbmitteln oft der Fall ist, führt dazu, daß bei der Verarbeitung Materialabbau mit nachfolgender Formaldehydfreisetzung auftreten kann, was die Einsetzbarkeit des Materials zur Herstellung von Formteilen stark beeinträchtigt. Die Automobilindustrie als einer der wichtigsten Märkte für Produkte aus POM hat spezielle Analysenmethoden für die Bestimmung der Formaldhydemission aus POM-Formteilen entwickelt (VDA Empfehlung Nr. 275, Dokumentation Kraftfahrwesen e.V. Juli 1994).

Damit es bei der Verarbeitung von eingefärbten POM-Formmassen zu keiner Beeinträchtigung der Produkt- und Materialeigenschaften kommt, muß der Materialabbau in eingefärbten POM-Formmassen unterdrückt werden. Zu diesem Zweck werden Stabilisatoren zugesetzt. Aber auch der Zusatz an Stabilisatoren konnte bislang dem Mangel der hohen Emission nicht abhelfen. Zudem führen bekannte Stabilisatoren und Stabilisatorsysteme, die eine Verminderung der Formaldehydemission bewirken, zu einer Beeinträchtigung anderer geforderter Materialeigenschaften, vor allem der Farbstabilität und der Oberflächenbeschaffenheit, aber auch des mechanisches Eigenschaftsprofils und der Formbelagsbildung.

Die Anforderungen an eingefärbte Polyoxymethylen Formmassen in Bezug auf die Verarbeitbarkeit haben in den letzten Jahren stetig zugenommen. Zum einen wird zur Herstellung von Formteilen aus Polyoxymethylen für den Einsatz im Automobil-, Elektro- und Medizintechnikbereich zunehmend die Heißkanaltechnologie bei Spritzgußwerkzeugen eingesetzt. Zum anderen werden sowohl die Spritzgußwerkzeuge als auch die Formteilgeometrien zunehmend komplexer. Diese Entwicklungen führen dazu, daß eingefärbte Polyacetal-Formmassen bei der Verarbeitung höheren Temperaturen ausgesetzt sind, was bei bisher kommerziell erhältlichen eingefärbten Polyacetal Formmassen zu hohen Formaldehydemissionen und zu Defekten auf der Oberfläche führt.

In JP 07331028 wird eine Zusammensetzung für ein eingefärbtes Polyoxymethylen Copolymer beschrieben. Neben einem sterisch gehinderten Phenol, einem Aminsubstituierten Triazin, einem Metallsalz, einem Ester aus einem mehrwertigen Alkohol mit 2-10 C-Atomen und einer Fettsäure mit 10-32 C-Atomen und einem Amid einer Fettsäure mit mehr als 10 C-Atomen werden Wasser, eine Aminverbindung und ein Alkohol zugesetzt.

In JP 07173368 wird eine Zusammensetzung für eine eingefärbte Polyoxymethylen-formmasse beschrieben, die aus einem sterisch gehinderten Phenol, einer aminosubstituierten Aminoverbindung, Hydroxiden oder Alkoxiden von Alkali- oder Erdalkalimetallen oder ihrer Salze mit anorganischen Säuren, einem Metallsalz einer Fettsäure und einem Amid einer höheren Fettsäure beseht.

WO 9516734 beansprucht eine Polyacetal Zusammensetzung mit reduziertem Formaldehyd-Geruch. Bei dieser Zusammensetzung ist auf der Oberfläche des Polyacetal-Granulats ein Ester eines mehrwertigen Alkohols mit einer Fettsäure aufgebracht.

EP 562856 beschreibt eine Polyoxymethylen Zusammensetzung mit reduzierter Emission und verbesserten Formteil-Oberflächen. Die Formmasse ist aus 0,01 - 5% eines sterisch gehinderten Phenols, 0,01 - 10 % Melamin-Formaldehyd-Kondensat und 0,05 - 4 % eines Fettsäureesters eines mehrwertigen Alkohols zusammengesetzt.

EP 498620 beschreibt eine rußhaltige, stabilisierte Polyacteal-Harzzusammensetzung. Diese enthält neben in einem in Ethylen-Polymer integrierten Ruß weitere Komponenten, so auch Alkali- oder Erdalkalimetallverbindungen, die sich von einem Hydroxid einer anorganischen Säure ableiten.

Alle im zitierten Stand der Technik beschriebenen Zusammensetzungen führen nicht zu hinreichend geringer Formaldehydemission.

Obwohl die Verwendung von POM als Trägermaterial für Pigmente wie oben angegeben bereits bekannt ist, wurde bislang dem bestehenden Mangel der chemischen Instabilität und nachfolgenden Formaldehydabspaltung bei der Verarbeitung und aus Formteilen nur unzureichend abgeholfen. Bisher bekannte Stabilisatorsysteme, die zu einer Verminderung der Formaldehydemission führen, bewirken die Ausbildung von Defekten auf Formteiloberflächen oder eine

Verminderung der Farbstabilität.

Es bestand daher die Aufgabe, neue eingefärbte POM-Formmassen zu entwickeln, in denen die bislang beobachtete Formaldehydemission wesentlich vermindert ist. Die Formteile, die aus diesen Formmassen hergestellt werden, sollten defektfreie Oberflächen und eine hohe Farbstabilität aufweisen, wobei die weiteren bekannten vorteilhaften Eigenschaften von POM nicht beeinträchtigt sind.

Diese Aufgabe wird durch eine Polyoxymethylen Formmasse gelöst, die folgende Komponenten enthält:
(A) 0.1 - 5.0 Gew.-% Farbmittel,
(B) 0.01 - 0.5 Gew.-% eines stickstoffhaltigen Stabilisators,
(C) 0.05 - 1 Gew.-% eines Esters aus einem mehrwertigen Alkohol und mindestens einer Fettsäure, und
(D) 0.001 - 0.5 Gew.-% eines Metallsalzes einer Fettsäure,
   ohne daß die Formmasse jedoch Hydroxide oder Alkoxide von Alkali oder Erdalkalimetallen oder ihre Salze mit anorganischen Säuren enthält.
   In einer vorteilhaften Ausführung der Erfindung enthält die Formmasse zusätzlich die Komponenten (E) bis (H):
(E) bis zu 1 Gew.-% eines Metallsalzes einer kurzkettigen Carbonsäure,
(F) bis zu 1.0 Gew.-% einer sterisch gehinderten Phenolverbindung,
(G) bis zu 1.0 Gew.-% mindestens eines Stabilisators aus der Gruppe der Benzotriazolderivate oder Benzophenonderivate oder aromatische Benzoatderivate,
(H) bis zu 0.5 Gew.-% eines sterisch gehinderten Amins zur Lichststabilisierung (HALS),
(I) Polyoxymethylen-Polymer und gegebenenfalls bis zu 40 Gew.-% weiterer üblicher Zusatzstoffe .

Überraschenderweise zeigt sich , daß durch die erfindungsgemäße Zusammensetzung der Polyoxymethylen Formmasse die Auswahl der Farbmittel nicht mehr auf herkömmliche besonders für POM geeignete Farbmittel beschränkt ist. Es wurde zudem überraschenderweise gefunden, daß eingefärbte Polyoxymethylen Formmassen mit der erfindungsgemäßen Zusammensetzung eine außerordentlich geringe Formaldehydemission und hohe Verarbeitungsstabilität besitzen und daß Formteile, die aus den erfindungsgemäßen Formmassen hergestellt werden, eine sehr geringe Formaldehydemission, defektfreie Oberflächen und eine hohe Farbstabilität aufweisen. Die Angaben in Gew.-% sind bezogen auf das Gesamtgewicht der Formmasse.

Als Farbmittel (A) können 0.1 - 5.0 Gew.-%, bevorzugt 0.5 - 2.0 %, beliebiger anorganischer Pigmente wie Titandioxid, Ultramarinblau, Kobaltblau oder organische Pigmente und Farben wie Phthalocyanine, Anthrachinone oder Ruß entweder einzeln oder als Gemisch oder zusammen mit polymerlöslichen Farbstoffen eingesetzt werden.

Die erfindungsgemäße Formmasse enthält 0.01 - 0.5 %, bevorzugt 0.03 - 0.3 %, eines stickstoffhaltigen Stabilisators (B). Als stickstoffhaltige Stabilisatoren geeignet sind heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine und aus diesen Verbindungen hergestellte Mischungen. Vorteilhaft sind weiter Polyamide und Dicyandiamid, Hamstoff und seine Derivate sowie Pyrrolidon und davon abgeleitete Verbindungen. Beispiele für geeignete Pyrrolidone sind zum Beispiel Imidazolidinon und davon abgeleiteteVerbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter Triamino-1,3,5-Triazin (Melamin) und seine Derivate, wie zum Beispiel Melamin-Formaldehydkondensate und Methylolmelamin. Ganz besonders bevorzugt sind Melamin, Methylolmelamin, Melamin-Formaldehydkondensate und Allantoin.Die stickstoffhaltigen Stabilisatoren können einzeln oder in Kombination verwendet werden.

Als Komponente (C) werden 0.05 - 1 Gew.-%, bevorzugt 0.1 - 0.5 Gew.-% eines Esters aus einem mehrwertigen Alkohol und einer mindestens einer Fettsäure (C), Ester aus höheren Fettsäuren mit 10 - 32 C-Atomen, bevorzugt 24 - 32 C-Atomen, und mehrwertigen Alkoholen aus 2 - 8 C-Atomen, bevorzugt 2 - 5 C-Atomen eingesetzt. Die Säuren müssen nicht vollständig verestert sein, sondem können auch nur teilweise verestert bzw. die Ester teilweise verseift sein. Besonders bevorzugte Alkohole sind Ethylenglykol, Glycerin, Butylenglykol und Pentaerythritol, unter den Fettsäuren werden Montansäuren besonders bevorzugt. Ganz besonders bevorzugte Ester sind Diester aus Glykol oder Glycerin und Montansäuren (Licowachs® E und Licolub® WE4, Hersteller Clariant AG).

Als Komponente (D) sind 0.001 - 0.5 Gew.-%, bevorzugt 0.01 - 0.2 %, besonders bevorzugt 0.01 - 0.1 % eines Metallsalzes einer Fettsäure (D) in der erfindungsgemäßen Formmasse enthalten. Es können Alkali- und Erdalkalimetallsalze oder Salze anderer zweiwertiger Metallionen, z.B. Zn²⁺, von langkettigen Fettsäuren mit 10 bis 32 C-Atomen, beispielsweise Stearate, Laurate, Oleate, Behenate, Montanate, Palmitate eingesetzt werden. Die Fettsäuren können sowohl ungesättigt als auch gesättigt sein und können auch mit Hydroxy- oder Aminogruppen substituiert sein. Bevorzugt sind Erdalkali- und Zinksalze der Stearinsäure und der Montansäuren.

Die weiteren Bestandteile, Komponenten (E) bis (H), der erfindungsgemäßen Formmasse sind optional und müssen nicht unbedingt enthalten sein, um das geforderten Eigenschaftsprofil zu erreichen. Jede dieser Komponenten verbessert jedoch mindestens eine der Eigenschaften geringe Emission, defektfreie Oberfläche und Farbstabilität.

Als Komponente (E) können 0.0 - 1.0 Gew.-%, bevorzugt 0,01-0,05 Gew.%, besonders bevorzugt 0.05 - 0.2 Gew.-% eines Metallsalzes einer kurzkettigen Carbonsäure (E) enthalten sein. Alle ein- und zweiwertigen Metallionen sind möglich, Alkali- und Erdalkalimetalle sind jedoch bevorzugt. Die kurzkettigen Carbonsäuren besitzen 3 - 8 C-Atome. Bevorzugt sind Propionate, Citrate und Pyruvate. Besonders bevorzugt ist Calciumcitrat.

Die Formmasse kann 0.0 bis 1.0 Gew.-%, bevorzugt 0.0 - 0.4 %, besonders bevorzugt 0.0 - 0.1 %, einer sterisch gehinderten Phenolverbindung (F) enthalten. Beispiele solcher handelsüblicher Verbindungen sind Pentaerithrityl-tetrakis -[3-(3,5-di-tert.butyl-4-hydroxyphenyl)-propionat] (Irganox® 1010, Firma Ciba Geigy), Triethylenglykol-bis-[3-(3-tert.butyl-4-hydroxy-5-methylphenyl)-propionat] (Irganox® 245, Firma Ciba Geigy), 3,3'-bis[3-(3,5-di-tert.butyl-4-hydroxyphenyl)-propionohydrazid] (Irganox MD 1024, Fa. Ciba Geigy), Hexamethylenglykol-bis-[3-(3,5-di-tert.butyl-4-hydroxyphenyl)-propionat] (Irganox® 259, Firma Ciba Geigy), 3,5-di-tert.butyl-4-hydroxytoluol (Lowinox® BHT, Firma Great Lakes). Bevorzugt sind Irganox 1010 und vor allem Irganox 245.

Weiterhin kann die Formmasse 0.0 - 1.0 Gew.-%, bevorzugt 0,01-0,9 Gew.-%, besonders bevorzugt 0.02-0.8 Gew.-% mindestens eines Stabilisators aus der Gruppe der Benzotriazolderivate oder Benzophenonderivate oder aromatische Benzoatderivate (G) enthalten. Bevorzugt ist 2-[2'-Hydroxy-3',5'-bis(1,1-dimethylbenzyl)phenyl]-benzotriazol, das als Tinuvin® 234 (Firma Ciba Geigy) im Handel erhältlich ist.

Als Komponente (H) können 0.0 - 0.5 Gew.-%, bevorzugt 0,01-0,4 Gew.-%, ganz besonders bevorzugt 0,4 Gew.-% eines sterisch gehinderten Amins zur Lichtstabiliserung (HALS) (H) in der erfindungsgemäßen Formmasse enthalten sein. Bevorzugt sind 2,2,6,6-tetramethyl-4-piperidyl-Verbindungen, z.B. Bis-(2,2,6,6-tetramethyl-4-piperidyl)-sebazat (Tinuvin® 770, Firma Ciba Geigy) oder das Polymer aus Bernsteinsäuredimethylester und 1-(2-Hydroxyethyl)-4-hydroxy-2,2,6,6-tetramethyl-4-piperidin (Tinuvin® 622, Firma Ciba Geigy).

Die als Basismaterial für die eingefärbten Formmassen verwendeten Polyoxymethylen Polymere (I) können Polyoxymethylenhomo- oder copolymere sein. Derartige Polymere sind dem Fachmann bekannt und in der Literatur beschrieben, wie zum Beispiel in: Saechtling, Kunststoff-Taschenbuch, Hanser-Verlag, 27. Ausgabe, Seiten 462 bis 465, worauf Bezug genommen wird. Die Homopolymere werden im allgemeinen durch Polymerisation von Formaldehyd oder Trioxan hergestellt, wobei die Polymerisation kationisch oder anionisch initiiert werden kann. Bevorzugt sind jedoch Polyoxymethylencopolymere, die neben Oxymethyleneinheiten noch Oxyalkyleneinheiten enthalten, wobei die Alkylengruppen 2 -8 Kohlenstoffeinheiten, linear oder verzweigt, enthalten können. Besonders bevorzugt sind Polyoxymethylenpolymere, die im wesentlichen Oxymethylen- und Oxyethyleneinheiten in der Polymerkette aufweisen. Der Anteil der Oxyethyleneinheiten an den Struktureinheiten der Polymerkette beträgt 0.1 bis 15 mol %, vorzugsweise 0.2 bis 10 mol %. Der Schmelzindex MFI, gemessen nach ISO 1133 bei 190 °C und 2.16 kg Auflagegewicht, beträgt 0,5 -75 g/10 min, bevorzugt 2-60 g/10 min und besonders bevorzugt von 5-35 g/10 min. Das Zahlenmittel des Molekulargewichts beträgt mindestens 5000 g/mol und höchstens 100000 g/mol, bestimmt durch GPC in Dimethylacetamid bei 150 bis 160 °C. An Stelle eines einzelnen POM-Copolymerisats ist auch eine Mischung von verschiedenen, unterschiedlich zusammengesetzten Polyoxymethylen-Copolymeren verwendbar. Die Herstellung der POM-Copolymere kann mit allgemein bekannten Herstellungsverfahren erfolgen. Ein mögliches Verfahren ist beispielsweise die Copolymerisation von Trioxan mit Dioxolan in Gegenwart allgemein üblicher Mengen von BF₃ und Methylal. Die erfindungsgemäße Polyoxymethylen-Formmasse enthält in der Regel mindestens 30 Gew.%, vorteilhaft mindestens 40 Gew.-% , besonders vorteilhaft mindestens 50 Gew.-% Polyoxymethylen-Polymer. Die erfindungsgemäße Polyoxymethylen-Formmasse enthält bis zu 99.839 Gew.-% Polyoxymethylen-Polymer, Komponente (I), vorteilhaft bis zu 99.369 Gew.-%, 99.84 Gew.-% oder 99.836 Gew.-%, besonders vorteilhaft sind 99.69 Gew.-%. Weitere bevorzugte Ausführungen der Erfindung lassen sich den Beispielen entnehmen.

Die erfindungsgemäße Formmasse kann weitere übliche Zusatzstoffe einzeln oder als Gemisch bis zu 40 Gew.-% enthalten, z.B. Nukleierungsmittel wie Polyoxymethylen Terpolymere oder Talk, Füllstoffe wie Glaskugeln, Wollastonit, Lehm, Molybdändisulfid oder Graphit, anorganische oder organische Fasern wie

Glasfasern, Carbonfasern oder Aramidfasern, Glasfasern einer Länge von > 3mm, insbesondere einer Länge von 5 bis 50 mm und thermoplastische oder duroplastische Kunststoffadditive oder Elastomere wie Polyethylen, Polyurethan, Polymethylmethacrylat, Polybutadien, Polystyrol oder auch Propfcopolymerisate, deren Kern durch Polymerisation von Buta-1,3-dien, Isopren, n-Butylacrylat, Ethylhexylacrylat oder deren Mischungen und deren Hülle durch Polymerisation von Styrol, Acrylnitril oder (Meth)acrylaten hergestellt wurde.

Eine besonders bevorzugte Ausgestaltung der Erfindung ist eine spezielle Zusammensetzung einer Polyoxymethylen Formmasse, die aufgrund einer überraschend gefunden Wechselwirkung zweier Komponenten eine besonders geringe Formaldehydemission aufweist. Diese Formmasse enthält:

Komponenten (A) und (B) wie oben beschrieben,
(C1) x Gew.-% eines Esters aus einem mehrwertigen Alkohol und mindestens einer Fettsäure,
(C2) y Gew.-% eines teilverseiften Esters eines mehrwertigen Alkohols und mindestens einer Fettsäure,
   wobei x größer als 0.01 Gew.-%, y kleiner als 0.99 Gew.-% und die Summe aus x und y kleiner als 1.0 Gew.-%ist,
(D) 0.0 - 0.5 Gew.-% eines Metallsalzes einer Fettsäure,

und gegebenenfalls zusätzlich die Komponenten (E) bis (I), die wie oben beschrieben beschaffen sind.

Überraschend hat sich gezeigt, daß durch die Verwendung einer Mischung der Komponenten (C1) und (C2) besonders geringe Emissionen erreichbar sind, was auf einer für die Formaldehydemission günstigen Wechselwirkung der beiden Komponenten beruht. Durch diese Wechselwirkung ist die Anwesenheit der Komponente (D) nicht unbedingt erforderlich und kann eingesetzt werden, um auch strengen Anforderungen an die Formaldehydemission von Formteilen aus eingefärbtem Polyoxymethylen zu erfüllen, da die zusätzliche Verwendung von (D) zu einer weiteren Verringerung der Formaldehydemission führt.

X beträgt 0.01 - 1 Gew.-%, bevorzugt 0.1 - 0.5 Gew.-% der Komponente (C1), die ein Ester aus einem mehrwertigen Alkohol und mindestens einer Fettsäure ist. Verwendet werden können Ester aus höheren Fettsäuren mit 10 - 32 C-Atomen, bevorzugt 24 - 32 C-Atomen, und mehrwertigen Alkoholen aus 2 - 8 C-Atomen, bevorzugt 2 - 5 C-Atomen. Die mehrwertigen Alkohole müssen nicht vollständig verestert sein, sondern können auch teilweise verestert sein. Bevorzugte Alkohole sind Ethylenglykol, Glycerin, Butylenglykol und Pentaerythritol, unter den Fettsäuren sind Montansäuren bevorzugt. Besonders bevorzugte Ester sind Diester aus Glykol oder Glycerin und Montansäuren (Licowachs® E und Licolub® WE4, Hersteller Clariant AG).

y beträgt 0.01 - 1 Gew.-%, bevorzugt 0.1 - 0.5 Gew.-%, der Komponente (C2), wobei teilverseifte Ester aus mehrwertigen Alkoholen und mindestens einer Fettsäure verwendet werden können. Es handelt sich dabei um teilverseifte Ester aus höheren Fettsäuren mit 10 - 32 C-Atomen, bevorzugt 24 - 32 C-Atomen, und mehrwertigen Alkoholen aus 2 - 8 C-Atomen, bevorzugt 2 - 5 C-Atomen. Die teilverseiften Ester können durch Reaktion eines vollständigen Esters mit einem Metallhydroxyd hergestellt werden. Es können auch Gemische von teilverseiften Estern eines teilweise veresterten mehrwertigen Alkohols mit einem Metallsalzes der entsprechenden Fettsäuren eingesetzt werden. Bevorzugte Alkohole sind Ethylenglykol, Glycerin, Butylenglykol und Pentaerythritol, unter den Fettsäuren sind Montansäuren bevorzugt. Bevorzugte Metalle sind solche, die als ein- oder zweiwertige Ionen vorkommen, z.B. Alkali- und Erdalkalimetalle. Besonders bevorzugt ist ein teilverseifter Ester aus Butylenglykol und Montansäuren, wobei überschüssige Montansäureeinheiten mit Calciumhydroxyd verseift sind (Licowachs® OP, Hersteller Clariant AG).

Die erfindungsgemäßen eingefärbten POM-Formmassen können mit den üblichen und bekannten Mischverfahren wie Granulierung, Extrusion, Kneten etc. hergestellt werden. Bevorzugt werden die erfindungsgemäßen Formmassen hergestellt, indem Polyoxymethylen Polymer mit Farbmitteln und Stabilisatoren vermischt und die Mischung anschließend granuliert wird. Bevorzugte Ausführungen der Erfindung, soweit nicht bereits in der Beschreibung enthalten, lassen sich den Beispielen entnehmen.

Die erfindungsgemäßen eingefärbten POM-Formmassen verfügen über eine wesentlich verminderte Emission. Die Verminderung der Formaldehydfreisetzung kann schon bei der Herstellung der Formmasse, z.B. beim Granulieren, und auch bei der Verarbeitung beobachtet werden. Somit leistet die erfindungsgemäße Polyoxymethylen Zusammensetzung einen Beitrag zur Arbeitshygiene und - sicherheit. Vor allem ist jedoch die Formaldehydemission von Formteilen, die durch Spritzguß oder Extrusion hergestellt wurden, wesentlich reduziert. So beträgt die Formaldehydemission, gemessen an Platten der Wandstärke 1 mm nach 24 h Lagerdauer nach VDA 275 im allgemeinen weniger als 20 mg/kg, vorzugsweise weniger als 10 mg/kg.

Die erfindungsgemäßen Formmassen und die daraus hergestellten Formteile besitzen eine hohe Farbstabilität. Unter Farbstabilität oder Farbechtheit wird verstanden, daß nach der Verarbeitung der Formmasse oder während des Gebrauchs der daraus hergestellten Formteile nur ein geringer Farbabstand ΔE, bestimmt nach DIN 6174, auftritt. Von Anwendern von eingefärbten Polyoxymethylenformteilen werden hohe Anforderungen an die Farbstabilität gestellt. Die Automobilindustrie prüft z.B. Kunststoff-Formteile für den Einsatz im KFZ in Bewitterungstests, die unter Bedingungen durchgeführt werden, wie sie in Florida oder Arizona vorherrschen, d.h. sowohl unter Einwirkung von hohen Temperaturen als auch von Sonnenlicht muß die Farbstabilität gewährleistet sein. Solche Bedingungen werden im allgemeinen im Labor simuliert, für Anwendungen im Automobilinnenraum wird z.B. nach der Zentralnorm PV 1303 (Heißlichtechtheitstest)(3. Änderung der PV 1303 vom Dezember 1993) bei einer Schwarzstandstemperatur von 100 °C, einer Probenraumtemperatur von 65 °C, einer relativen Luftfeuchte von 20 % und einer Xenonlicht-Bestrahlungsstärke von 60 W/m² bei 300 bis 400 nm (weitere Angaben in DIN 75202) geprüft. Die Farbänderung des Formteils wird mit der Graumaßstabsstufe nach DIN 54001 angegeben. Formteile aus den erfindungsgemäßen Formmassen erfüllen die hohen Anforderungen des Heißlichtechtheitstests nach PV 1303, wenn die Formmassen die UV-Stabilisatoren (G) und (H) enthalten. Aber auch Formmassen, die die Komponenten (G) und (H) nicht enthalten, zeigen eine überraschend hohe Farbstabilität unter Einwirkung von Licht oder hohen Temperaturen. Diese Formmassen sind zur Herstellung von Formteilen für den Einsatz im Spielzeug-,

Elektronik oder Medizintechnikbereich besonders geeignet.

Unter defektfreier Oberfläche wird verstanden, daß komplexe Oberflächen durch Spritzguß ohne Spratzer, Entfärbungen, stellenweise Farbabweichungen oder Flecken erzeugt werden können. Bei der Herstellung von komplexen Oberflächen, z.B. bei Lautsprechergittern, durch Spritzguß setzt sich bei Verarbeitern die Heißkanaltechnologie immer mehr durch. Die Polymerschmelze wird im allgemeinen durch mehrere Heißkanaldüsen in die Werkzeugkammer eingespritzt. In den Heißkanälen und den Düsen treten im allgemeinen hohe Temperaturen auf, die bei Polyoxymethylen Kunststoffen zu Materialabbau führen können. Durch diese hohe thermische Beanspruchung des Materials war es mit herkömmlichen Zusammensetzungen von Polyoxymethylen Formmassen oft nicht möglich, defektfreie Oberflächen zu erzeugen. Beim Kunstoffverarbeiter zeigt sich die ungenügende thermische Stabilität durch hohe Ausschußraten bei der Produktion, welche die wirtschaftliche Verarbeitung von Polyoxymethylen Formmassen beeinträchtigt. Mit den erfindungsgemäßen Formmassen lassen sich defektfreie Oberflächen bei komplexen Formteilen realisieren.

Die mechanischen Eigenschaften der erfindungsgemäßen Formmassen entsprechen den üblichen Anforderungen an POM-Handelsprodukte, so daß die für POM üblichen Anwendungsfelder und Verarbeitungstechniken ohne Einschränkung genutzt werden können.

Besondere Anwendungsgebiete für die erfindungsgemäßen Formmassen sind Innenausstattungen und Verkleidungen von Verkehrsmitteln wie Automobile, Flugzeuge etc, Haushaltswaren, Spielzeugartikel, Babyartikel sowie elektronische und elektrotechnische Bauteile und Geräte. Besonders geeignet sind die erfindungsgemäßen Formmassen zur Herstellung von Apparaturen und Instrumenten, oder Teilen davon, für medizinische Anwendungen. Die erfindungsgemäß hergestellten Formmassen weisen im Vergleich zu den derezit handelsüblichen Produkten die geringste Formaldehydemission auf, besitzen defektfreie Oberflächen und eine hohe Farbstabilität, wenn die Formteile Licht oder Hitze über lange Zeit ausgesetzt sind. Die besonderen Vorteile der vorliegenden Erfindung sollen durch die folgenden Beispiele illustriert werden, ohne jedoch auf diese beschränkt zu sein.

Auf sämtliche in dieser Patentanmeldung erwähnten Referenzen wird hiermit ausdrücklich Bezug genommen.

### Beispiele

In den anschließenden Beispielen wurden die Materialeigenschaften nach folgenden Methoden bestimmt:
Schmelzindex (MFI) nach ISO 1133 bei 190 °C und 2.16 kg Auflagegewicht;
Zug-E-Modul nach ISO 527
Streckspannung nach ISO 527
Bruchdehnung nach ISO 527
Formaldehydemission: Aus den eingefärbten POM-Formmassen werden Platten der Wandstärke 1 mm gefertigt. Nach einer Lagerdauer von 24 h wurde die Formaldehydemission aus den Platten nach VDA 275 ermittelt (VDA Empfehlung Nr. 275, Dokumentation Kraftfahrwesen e.V. Juli 1994).
Prüfkörperherstellung: Das Polyacetalgranulat wird durch Spritzguß zu Plättchen mit den Dimensionen 80*50*1 mm geformt. Eine Spritzgießmaschiene Kraus Maffei KM 120/340B wird mit folgenden Spritzgießparametern verwendet: Massetemperatur 195 °C, Fließfrontgeschwindigkeit 200 mm/s, Werkzeugwandtemperatur 85 °C, Nachdruck 900 bar, Nachdruckzeit 30 s, Kühlzeit 10 s, Staudruck 0 bis 10 bar. Die Prüfkörper werden vor der Prüfung für 24 h im Norm-Klimaschrank bei 23 °C und 50 % relativer Luftfeuchte gelagert.
Prüfung: Zwei Prüfkörper werden in einer 1 I Glasflasche über 50 ml E-Wasser an einem Edelstahlhacken aufgehängt und für 3 h im Umlufttrockenschrank bei 60 °C gelagert. Die Prüfkörper werden aus der Prüfflasche entfernt. 5 ml Probenlösung werden in ein Reagenzglas pipettiert, das Reagenzglas wird für 10 Minuten bei 95 °C getempert. Nun werden 3 ml Acetylaceton und 3 ml einer 20 %igen Ammoniumacetatlösung in das Reagenzglas hinzugegeben. Der Formaldehyd bildet mit den Reagentien den Diacetyldihydrolutidin-Komplex, dessen Absorption bei 412 nm photometrisch bestimmt wird. Aus der Absorption wird die Formaldehy-Konzentration in der Probenlösung berechnet.

Farbstabilität (Heißlichtechtheit) nach PV 1303: Aus den eingefärbten POM-Formmassen werden Platten der Wandstärke 1 mm gefertigt. Die Platten werden gemäß der Zentralnorm PV 1303 der Volkswagen AG (3. Änderung der PV 1303 vom Dezember 1993) der Xenonbogen-Gleichlaufbelichtung auf einem Xenontestgerät 1200 CPS der Firma Heraeus getestet. Der Graumaßstab wurde gemäß DIN 54001 bestimmt. Eine Farbabmusterungsleuchte Spectra Light der Firma Macbeth gemäß DIN 6173 T2 wurde verwendet. Die Endpunktbestimmung wurde gemäß DIN 75202 VDA-Merkblatt 3/91, durch Messen des Gesamtfarbabstandes des Lichtechtheitsmaßstabes Stufe 6 vor und nach der Zyklusprüfung durchgeführt. Jede Probe wurde nach 5 und 10 aufeinanderfolgenden Zyklen hinsichtlich der Graumaßstabsstufe nach DIN 54001 ausgewertet. Die Gesamtlaufzeit des Tests für 10 Zyklen betrug 360 h. Bei einem Test nach PV 1303 werden die zu untersuchenden Proben mit einem weißen Polyester-Vlies hinterlegt. Die Belichtung wird bei einer Schwarzstandstemperatur von 100 °C, einer Probenraumtemperatur von 65 °C, einer relativen Luftfeuchte von 20 % und einer Xenonlicht-Bestrahlungsstärke von 60 W/m² bei 300 bis 400 nm durchgeführt. Für weitere Angaben sei auf die DIN 75202 verwiesen. Der Endpunkt einer Belichtungsperiode wird gemäß DIN 75202 bestimmt. Dazu wird zusammen mit den Prüfkörpern die Typfärbung 6 des Lichtechtheitsmaßstabes belichtet. Der Endpunkt ist erreicht, wenn die Typfärbung 6 einen Kontrast zwischen belichteter und unbelichteter Fläche entsprechend Stufe 3 des Graumaßstabes erreicht hat. Der Kontrast wird farbmetrisch mit einem Spektralphotometer bestimmt. Der Endpunkt ist erreicht, wenn ein CIELAB-Wert von 4.3 ermittelt wird. Die Farbänderung des belichteten Formteils wird mit der Graumaßstabsstufe nach DIN 54001 angegeben.

Oberflächenbeschaffenheit von Formteilen: Die Oberflächenqualität wurde an Lautsprechergitterblenden, hergestellt auf einem Heißkanalwerkzeug mit 4 Heißkanälen, durchgeführt. Es wurden Gitter bei Heißkanaltemperaturen von 205 °C bis 265 °C in Schritten von 10 °C hergestellt. Die Heißkanaldüsentemperatur betrug 180 °C, die Einspritzgeschwindigkeit 45 mm/s, der Einspritzdruck 88 bar, die Einspritzzeit 1.28 s, die Schneckendrehzahl 70 U/min, die Zylindertemperatur 195 °C und die Werkzeugtemperatur 80 °C. Die Oberfläche der bei diesen Bedingungen erhaltenen Gitterblenden wurde optisch beurteilt, indem die Anzahl der Defekte ("Spratzer", Entfärbungen) gezählt wurde. Die Anzahl der Oberflächendefekte bei einer Heißkanaltemperatur wurde über 10 Lautsprechergitter gemittelt.

Die Ergebnisse der Materialprüfung an den Granulaten aus den folgenden Beispielen und Vergleichsbeispielen sind in den Tabellen 1 bis 3 zusammengefaßt.

### Beispiel 1: Herstellung des Basispolymeren (Polyoxymethylen Copolymer)

In einem Batch-Reaktor wurden bei einer Temperatur von 80 °C und einem Druck von ca. 1 bar 94.4 Gew.-% Trioxan, 5.6 Gew.-% Dioxolan und 800 ppm Methylal vorgelegt. Zu dieser Mischung wurden 30 ppm BF₃. hinzugegeben. Die Mengenangaben sind auf die gesamte Monomermischung bezogen. Nach einer Induktionszeit von 30 Sekunden begann die Polymerisationsreaktion. Das gebildete Rohpolymer wurde in einer Wasser/Triethylamin-Mischung suspendiert und danach bei 170 °C in einer Wasser/Methanol (10/90) Mischung hydrolysiert. Beim Abkühlen auf Raumtemperatur fiel das Polymer als feines Pulver aus. Das Polymer wurde abgesaugt, mit Wasser gewaschen und getrocknet. Das Produkt besitzt einen Schmelzindex (MF1) von 27 g/10 min.

### Beispiel 2:

Folgende Komponenten werden zusammengegeben und in einem Henschel-Mischer intensiv vermischt:
510 g Granufin Samt 64, 90 g Kronos 2220, 35.33 g PV Echtrosa E 01, 18.67 g Heliogen Blau K 7090, 30 g Irganox® 245, 70 g Melamin, 200 g Licowachs® E, 100 g Calciumcitrat, 400 g Tinuvin® 234, 200 g Tinuvin® 770, 30 g Magnesiumstearat, ad 100 kg Polyoxymethylen-Basispolymer nach Beispiel 1. Die Mischung wird auf einem Zweischneckenextruder granuliert.

### Beispiel 3:

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 10.5 g Melamin, 30 g Licowachs® E, 15 g Calciumcitrat, 60 g Tinuvin® 234, 30 g Tinuvin® 770, 4.5 g Magnesiumstearat, ad 15 kg Polyoxymethylen-Basispolymer nach Beispiel 1. Die Mischung wird auf einem Zweischneckenextruder granuliert.

### Beispiel 4

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 10.5 g Melamin, 30 g Licowachs® OP, 15 g Calciumcitrat, 60 g Tinuvin® 234, 30 g Tinuvin® 770, 4.5 g Magnesiumstearat, ad 15 kg Polyoxymethylen-Basispolymer nach Beispiel 1. Die Mischung wird auf einem Zweischneckenextruder granuliert.

### Beispiel 5

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 10.5 g Melamin, 30 g Licowachs® E, 60 g Tinuvin® 234, 30 g Tinuvin® 770, 4.5 g Magnesiumstearat, ad 15 kg Polyoxymethylen-Basispolymer nach Beispiel 1. Die Mischung wird auf einem Zweischneckenextruder granuliert.

### Beispiel 6

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 10.5 g Melamin, 15 g Licowachs E, 15 g Licowachs® OP, 15 g Calciumcitrat, 4.5 g Magnesiumstearat, , 60 g Tinuvin® 234, 30 g Tinuvin® 770, ad 15 kg Polyoxymethylen-Basispolymer nach Beispiel 1. Die Mischung wird auf einem Zweischneckenextruder granuliert.

### Beispiel 7

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 6 g Allantoin, 30 g Licowachs® E, 15 g Calciumcitrat, 7.5 g Magnesiumstearat, , 60 g Tinuvin® 234, 30 g Tinuvin® 770, ad 15 kg Polyoxymethylen-Basispolymer nach Beispiel 1. Die Mischung wird auf einem Zweischneckenextruder granuliert.

### Beispiel 8

Folgende Komponenten werden zusammengegeben und in einem Henschel-Mischer intensiv vermischt:
110 g Kronos 2220, 40 Renolschwarz VE, 4 g Titanorange 6994, 1.3 g Renolrot EKEA 06, 4.5 g Irganox® 245, 10.5 g Melamin, 30 g Licowachs® E, 15 g Calciumcitrat, 7.5 g Natriumstearat, , 60 g Tinuvin® 234, 30 g Tinuvin® 770, ad 15 kg Polyoxymethylen-Basispolymer nach Beispiel 1. Die Mischung wird auf einem Zweischneckenextruder granuliert.

### Beispiel 9

Folgende Komponenten werden zusammengegeben und in einem Henschel-Mischer intensiv vermischt: 110 g Kronos 2220, 40 g Renolschwarz VE, 4 g Titanorange 6994, 1.3 g Renolrot EKEA 06, 4.5 g Irganox® 245, 10.5 g Melamin, 30 g Licolub® WE 4, 15 g Calciumcitrat, 60 g Tinuvin® 234, 30 g Tinuvin® 770, 4.5 g Magnesiumstearat, ad 15 kg Polyoxymethylen-Basispolymer nach Beispiel 1. Die Mischung wird auf einem Zweischneckenextruder granuliert.

### Beispiel 10

Folgende Komponenten werden zusammengegeben und in einem Henschel-Mischer intensiv vermischt:
105 g PV Echtgelb HG, 1.65 g Crano-Rot DPP-BP, 0.3 g Braun EKX 881, 0,135 g Schwarz EKV 80030, 45 g Irganox® 245, 7.5 g Melamin, 30 g Licowachs® E, 15 g Calciumcitrat, 7.5 g Magnesiumstearat, ad 15 kg Polyoxymethylen-Basispolymer nach Beispiel 1. Die Mischung wird auf einem Zweischneckenextruder granuliert.

### Beispiel 11

Folgende Komponenten werden zusammengegeben und in einem Henschel-Mischer intensiv vermischt:
596 g Renolschwarz VE, 45 g Sicotangelb K 2112, 60 g Kronos 2220, 13 g Renolbraun EKX 881, 30 g Irganox® 245, 70 g Melamin, 200 g Licowachs® E, 100 g Calciumcitrat, 400 g Tinuvin® 234, 200 g Tinuvin® 770, 30 g Magnesiumstearat, ad 100 kg Polyoxymethylen-Basispolymer nach Beispiel 1. Die Mischung wird auf einem Zweischneckenextruder granuliert.

### Beispiel 12:

Folgende Komponenten werden zusammengegeben und in einem Henschel-Mischer intensiv vermischt: 190 g Acetylenruß, 330 g Kronos 2220, 240 g Sicotangelb K 2112, 20 g Renolbraun EKX 851, 300 g Irganox® 245, 200 g Licowachs® E, 70 g Melamin, 50 g Magnesiumstearat, 400 g Tinuvin® 234, 400 g Tinuvin® 770, 13 kg Paraloid EXL 2600 (Hersteller Rohm&Haas), ad 100 kg Polyoxymethylen-Basispolymeren. Die Mischung wird auf einem Zweischneckenextruder granuliert.

Das in diesem Beispiel verwendete Polyoxymethylen-Basispolymer wird analog Beispiel 1 hergestellt. Abweichend von Beispiel 1 wurden jedoch 350 ppm Methylal zugegeben. Das Basispolymer hat einen Schmelzindex (MFI) von 9 g/10min.

### Vergleichsbeispiel 1

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 4.5 g Melamin, 30 g Licowachs® C, 15 g Calciumcitrat, 60 g Tinuvin® 234, 30 g Tinuvin® 770, ad 15 kg Polyoxymethylen-Basispolymer nach Beispiel 1. Die Mischung wird auf einem Zweischneckenextruder granuliert.

### Vergleichsbeispiel 2

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 10.5 g Melamin, 30 g Licowachs® E, 15 g Calciumcitrat, 60 g Tinuvin 234®, 30 g Tinuvin® 770, ad 15 kg Polyoxymethylen-Basispolymer nach Beispiel 1. Die Mischung wird auf einem Zweischneckenextruder granuliert.

### Vergleichsbeispiel 3

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 4.5 g Irganox® 245, 10.5 g Melamin, 15 g Calciumcitrat, 60 g Tinuvin® 234, 30 g Tinuvin® 770, 4.5 g Magnesiumstearat, ad 15 kg Polyoxymethylen-Basispolymer nach Beispiel 1. Die Mischung wird auf einem Zweischneckenextruder granuliert.

### Vergleichsbeispiel 4

Folgende Komponenten werden zusammengegeben und in einem Henschel-Mischer intensiv vermischt:
225 g Kronos 2220, 30 g Licowachs® C, 4.5 g Irganox® 245, 15 g Calciumcitrat, 60 g Tinuvin® 234, 30 g Tinuvin® 770, ad 15 kg Polyoxymethylen-Basispolymer nach Beispiel 1. Die Mischung wird auf einem Zweischneckenextruder granuliert.

### Vergleichsbeispiel 5:

Folgende Komponenten werden zusammengegeben und in einem Henschel-Mischer intensiv vermischt:
110 g Kronos 2220, 40 g Renolschwarz VE. 4 g Titanorange 6994, 1.3 g Renolrot EKEA 06, 15 g Melamin, 30 g Licowachs® E, 7.5 g Magnesiumstearat, 7.5 g Magnesiumoxid ad 15 kg Polyoxymethylen-Basispolymer nach Beispiel 1. Die Mischung wird auf einem Zweischneckenextruder granuliert.

### Vergleichsbeispiel 6:

Folgende Komponenten werden zusammengegeben und in einem Henschel-Mischer intensiv vermischt:
110 g Kronos 2220, 40 g Renolschwarz VE, 4 g Titanorange 6994, 1.3 g Renolrot EKEA 06, 15 g Melamin, 30 g Licowachs® E, 7.5 g Magnesiumstearat, 7.5 g Magnesiumhydroxid ad 15 kg Polyoxymethylen-Basispolymer nach Beispiel 1. Die Mischung wird auf einem Zweischneckenextruder granuliert.

### Vergleichsbeispiel 7:

Folgende Komponenten werden zusammengegeben und in einem Henschel-Mischer intensiv vermischt:
596 g Renolschwarz VE, 45 g Sicotangelb K 2112, 60 g Kronos 2220, 13 g Renolbraun EKX 881, 30 g Irganox® 245, 30 g Melamin, 200 g Licowachs® C, 100 g Calciumcitrat, 400 g Tinuvin® 234, 200 g Tinuvin® 770, ad 100 kg Polyoxymethylen-Basispolymer nach Beispiel 1. Die Mischung wird auf einem Zweischneckenextruder granuliert.

### Vergleichsbeispiel 8

Folgende Komponenten werden zusammengegeben und in einem Henschel-Mischer intensiv vermischt: 190 g Acetylenruß, 330 g Kronos 2220, 240 g Sicotangelb K 2112, 20 g Renolbraun EKX 851, 600 g Irganox® 245, 200 g Licowachs® C, 50 g Eurelon®, 30 g Dicyandiamid, 400 g Tinuvin® 234, 400 g Tinuvin® 770, 13 kg Paraloid® EXL 2600 (Hersteller Rohm&Haas), ad 100 kg Polyoxymethylen-Basispoylmeren. Die Mischung wird auf einem Zweischneckenextruder granuliert. Das in diesem Vergleichsbeispiel verwendete Polyoxymethylen-Basispolymer wird analog zu Beispiel 12 hergestellt; bei der Herstellung wurden 350 ppm Methylal zugegeben, das Basispolymer hat einen Schmelzindex (MFI) von 9 g/10min.

Aus den Granulaten der Beispiele und Vergleichsbeispiele wurden im Spritgußverfahren die Prüfkörper für die Bestimmung des Zug-E-Moduls, der Streckspannung und der Bruchdehnung sowie die Platten zur Ermittlung der Formaldehydemission und der Farbstabilität geformt. Aus dem Granulat aus Beispiel 11 und Vergleichsbeispiel 7 wurden im Spritzgußverfahren Lautsprechergitterblenden hergestellt. Die Ergebnisse der mechanischen Prüfungen und der Prüfung der Farbstabilität aus den erfindungsgemäßen Beispielen sind in Tabelle 1, an den Vergleichsbeispielen in Tabelle 2 angegeben. In Tabelle 3 sind die Ergebnisse der Untersuchung der Ausbildung von Oberflächendefekten an Lautsprechergitterblenden (Beispiel 11 und Vergleichsbeispiel 7) angegeben.

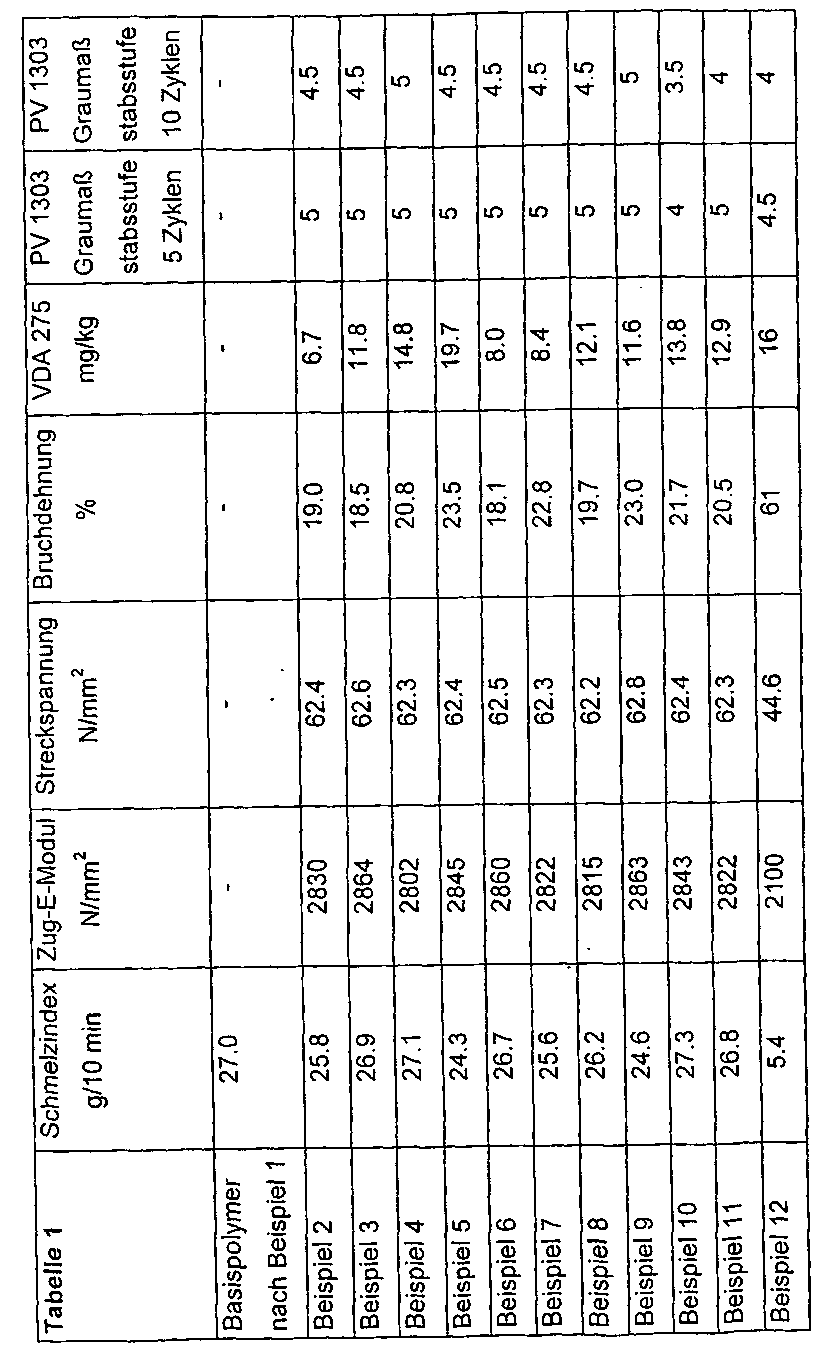

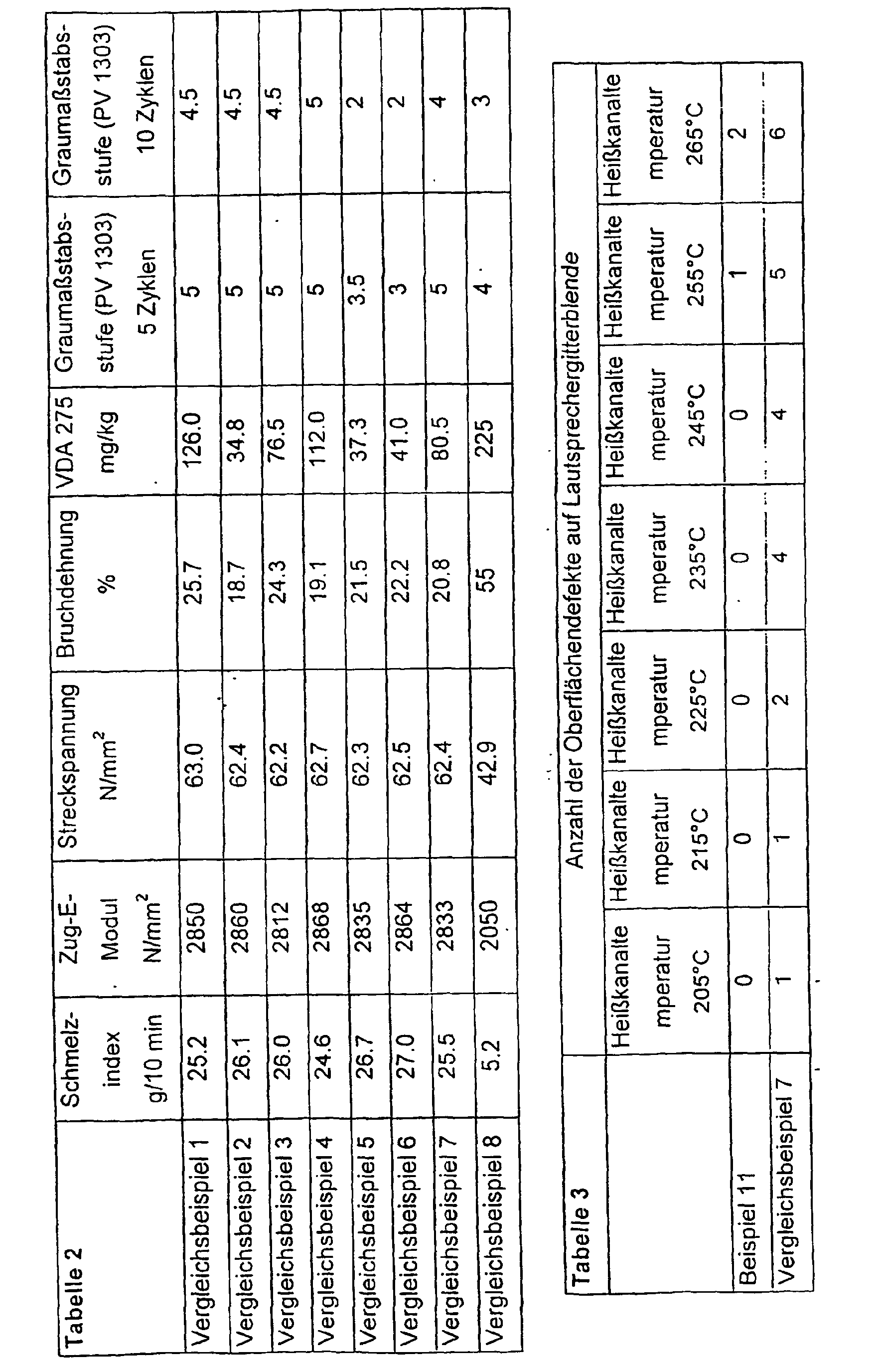

## Patentansprüche

1. Eingefärbte Polyoxymethylen-Formmasse enthaltend
Komponente (A) 0,1 bis 5,0 Gew.-% Farbmittel,
Komponente (B) 0,01 bis 0,5 Gew.-% eines stickstoffhaltigen Stabilisators,
Komponente (C) 0,05 bis 1 Gew.-% eines Esters aus einem mehrwertigen
Alkohol und mindestens einer Fettsäure,
Komponente (D) 0,001 bis 0,5 Gew.-% eines Metallsalzes einer Fettsäure,
Komponente (E) bis zu 1,0 Gew.-% eines Metallsalzes einer kurzkettigen Carbonsäure,
Komponente (F) bis zu 1,0 Gew.-% einer sterisch gehinderten Phenolverbindung,
Komponente (G) bis zu 1,0 Gew.-% mindestens eines Stabilisators aus der
Gruppe der Benzotriazolderivate oder Benzophenonderivate oder aromatische Benzoatderivate,
Komponente (H) bis zu 0,5 Gew.-% eines sterisch gehinderten Amins zur Lichtstabilisierung (HALS),
Komponente (I) Polyoxymethylen-Polymer, und
gegebenenfalls bis zu 40 Gew.-% weiterer üblicher Zusatzstoffe,
ohne dass die Formmasse jedoch Hydroxide oder Alkoxide von Alkali oder Erdalkalimetallen oder ihre Salze mit anorganischen Säuren enthält.

2. Eingefärbte Polyoxymethylen-Formmasse nach Anspruch 1, **dadurch** gekenngeichnet, dass sie Komponente (A) 0,5 bis 2,0 Gew.-%,
Komponente (B) 0,03 bis 0,3 Gew.-%,
Komponente (C) 0,1 bis 0,5 Gew.-%, und
Komponente (D) 0,01 bis 0,2 Gew.-% enthält.

3. Eingefärbte Polyoxymethylen-Formmasse nach Anspruch 1 oder 2, **dadurch gekennzeichnet, dass** sie 0,01 bis 0,1 Gew.-% Komponente (D) enthält.

4. Eingefärbte Polyoxymethylen-Formmasse nach einem oder mehreren der
Ansprüche 1 bis 3 enthaltend
Komponente (E) 0,01-0,05 Gew.-%,
Komponente (F) bis zu 0,4 Gew.-%,
Komponente (G) 0,01-0,8 Gew.-%, und
Komponente (H) 0,01-0,4 Gew.-%.

5. Eingefärbte Polyoxymethylen-Formmasse nach einem oder mehreren der
Ansprüche 1 bis 4 enthaltend
Komponente (E) 0,05-0,2 Gew.-%,
Komponente (F) bis zu 0,1 Gew.-%,
Komponente (G) 0,02-0,8 Gew.-%, und
Komponente (H) 0,4 Gew.-%.

6. Eingefärbte Polyoxymethylen-Formmasse nach einem oder mehreren der
Ansprüche 1 bis 5, wobei als Farbmittel, Komponente (A), anorganische
Pigmente, wie Titandloxid, Ultramarinblau, Kobaltblau, organische Pigmante und
Farben, wie Phthalocyanine, Anthrachinone, oder Ruß entweder einzein oder als
Gemisch oder zusammen mit polymeslichen Farbstoffen eingesetzt werden.

7. Eingefärbte Polyoxymethylen-Formmasse nach einem oder mahreren der
Ansprüche 1 bis 6, wobei als stickstoffhaltiger Stabllisator, Komponente (B),
varwandet werden: heterocyclische Verbindungen mit mindestens einem
Stickstoffatom als Heteroatom, welches entweder mit einem aminosubstituierten
Kohlenstoffatom oder einer Carbonylgruppe banachbart ist, Pyridazin, Pyrimidin,
Pyrazin, Pyrrolidon, Aminopyridin und davon abgeleltete Verbindungen,
Melamin, 2,6-Diaminopyridin, substituierte und dimere Aminopyridine, Melamin-Formaldehyd-kondensate, Polyamide, Dicyandiamid, Hamstoff und seine
Derivate, Pyrrolidon und davon abgeleiete Verbindungen, Imidazolidinon und
davon abgeleitate Varbindungen. Hydentoin und seine Derivate, Allantoin und
seine Derivate und aus diesen Verbindungen hergestellte Mischungen.

8. Eingefärbte Polyoxymethylen-Formmasse nach einem oder mehreren der Ansprüche 1 bis 7, wobei als stickstoffhaltiger Stabillsator, Komponente (B), Melamin. Methylolmelaimin, Melamin-Formaldehydkondensate oder Allantoin, ainzein oder als Mischung aus mehreren der vorgenannten Verbindungen, verwandet wird.

9. Eingefärbte Polyoxymethylen-Formmasse nach einem oder mehreren der Ansprüche 1 bis B, wobei der Ester aus einem mehrwertigen Alkohol und mindestens einer Fattsäure, Komponente (C), ein Ester aus einer höheren Fettsäure mit 10 bis 32 Kohlanstoffatomen und einem und einem mehrwertigen Alkohol mit 2 bis 8 Kohlenstoffatomen ist.

10. Eingefärbte Polyoxymethylen-Formmasse nach einem oder mehreren der Ansprüche 1 bis 8, wobei der Ester aus einem mehrwertigen, Alkohol und mindestens einer Fettsäure, Komponente (C), ein Ester aus einer höheren Fettsäure mit 24 bis 32 Kohlenstoffatomen und einem und einem mehrwertigen Alkohol mit 2 bis 5 Kohlenstoffatomen ist.

11. Eingefärbte Polyoxymethylen-Formmasse nach einem oder mehreren der Ansprüche 1 bis 10, wobei dar Ester aus einem mehrwartigen Alkohol und mindestens einer Fettsäure, Komponente (C), ein Montansäuresster, und/oder ein Fettsäuresster mit Ethylenglycol, Glycorin, Butylenglykol oder Pentaerythritol als Alkoholkomponente ist.

12. Eingefärbte Polyoxymethylen-Formmasse nach einem oder mehreren der Ansprüche 1 bis 11, wobei der Ester aus einem mehrwertigen Alkohol und mindestens einer Fattsäure, Komponente (C), ein Diester aus Glykol oder Glycerin und Montansäure ist.

13. Eingefärbte Polyoxymethylen-Formmasse nach einem oder mehreren der Ansprüche 1 bis 12, wobei das Metrillsolz einer Fettsäure, Komponente (D) ein Alkalimatallsalz, Erdalkalimetallsalz, oder Salz eines anderen zwalwertigen Metallions einer gesättigten und/oder ungesättigten Fettsäure mit 10 bis 32 Kohlenstoffatomen, wie Stearat, Laurat, Oleat, Behenat, Montanat, Palmitat, ist.

14. Eingefärbte Polyoxymethylen-Formmasse nach einem oder mehreren der Ansprüche 1 bis 13, wobei das Metallsalz einer Fettsäure, Komponente (D), ein Beryllium-,Magnesium-,Calcium-,Strontium-,Barium- oder Zinksalz der Stearinsäure oder der Montansäure ist.

15. Eingefärbte Polyoxymethylen-Formmasse nach einem oder mehreren der Ansprüche 1 bis 14, wobei das Metallsalz einer kurzkettigen Carbonsäure, Komponente (E), ein Propionat, Citrat oder Pyruvat oder ein Salz einer anderen Carbonsäure mit 3 bis 8 Kohlenstoffatomen ist und ein Salz mit Alkali- oder Erdalkalimetallen oder anderen ein oder zweiwertigen Metallionen ist.

16. Eingefärbte Polyoxymethylen-Formmasse nach einem oder mehreren der Ansprüche 1 bis 15, wobei als Metallsalz einer kurzkettigen Carbonsäure, Komponente (E), Calciumcitrat verwendet wird.

17. Eingefärbte Polyoxymethylen-Formmasse nach einem oder mehreren der Ansprüche 1 bis 16 wobei als sterisch gehinderte Phenolverbindung, Komponente (F), Pentaerithrityl-tetrakis-[3-(3,5-di-tert.butyl-4-hydroxyphenyl)-propionat] (Irganox 1010, Firma Ciba Geigy), Triethylenglykol-bis-[3-(3-tert.butyl-4-hydroxy-5-methylphenyl)-propionat] (Irganox 245, Firma Ciba Geigy), 3,3'-bis[3-(3,5-di-tert.butyl-4-hydroxyphenyl)-propionohydrazid] (Irganox MD 1024, Fa. Ciba Geigy), Hexamethylenglykol-bis-[3-(3,5-ditert.butyl-4-hydroxyphenyl)-propionat] (Irganox 259, Firma Ciba Geigy), 3,5-ditert.butyl-4-hydroxytoluol (Lowinox BHT, Firma Great Lakes) verwendet werden.

18. Eingefärbte Polyoxymethylen-Formmasse nach einem oder mehreren der Ansprüche 1 bis 17, wobei als Stabilisator aus der Gruppe der Benzotriazolderivate oder Benzophenonderivate oder aromatischen Benzoatderivate, Komponente (G), 2-[2'-Hydroxy-3',5'-bis(1,1-dimethylbenzyl)phenyl]-benzotriazol (Tinuvin 234) verwendet wird.

19. Eingefärbte Polyoxymethylen-Formmasse nach einem oder mehreren der Ansprüche 1 bis 18, wobei als sterisch gehindertes Amin zur Lichtstabilisierung, Komponente (H), 2,2,6,6-Tetramethyl-4-piperidyl-Verbindungen, insbesondere Bis-(2,2,6,6-tetramethyl-4-piperidyl)sebazat (Tinuvin 770) oder das Polymer aus Bemsteinsäuredimethylester und 1-(2-Hydroxyethyl)-4-hydroxy-2,2,6,6-tetramethyl-4-piperidin (Tinuvin 622) verwendet werden.

20. Eingefärbte Polyoxymethylen-Formmasse nach einem oder mehreren der Ansprüche 1 bis 19, enthaltend bis zu 40 Gew.-%. weiterer Zusatzstoffe ausgewählt aus einem oder mehreren der folgenden Stoffe: Nukleierungsmittel, wie Polyoxymethylen-Terpolymere oder Talk, Füllstoffe, wie Glaskugeln, Wollastonit, Lehm, Molybdändisulfid oder Graphit, anorganische oder organische Fasern wie Glasfasern, Carbonfasem oder Aramidfasern, Glasfasern mit einer Länge von > 3mm, thennoplastische oder duroplastische Kunststoffadditive oder Elastomere wie Polyethylen, Polyurethan, Polymethylmethacrylat, Polybutadien, Polystyrol oder auch Propfcopolymerisate, deren Kern durch Polymerisation von Buta-1,3-dien, Isopren, n-Butylacrylat, Ethylhexylacrylat oder deren Mischungen und deren Hülle durch Polymerisation von Styrol, Acrylnitril oder (Meth)acrylaten hergestellt wurde.

21. Eingefärbte Polyoxymethylen-Formmasse enthaltend
Komponente (A) 0,1 bis 5,0 Gew.-% Farbmittel,
Komponente (B) 0,01 bis 0,5 Gew.-% eines stickstoffhaltigen Stabilisators, Komponente (C1) ein mit x Gew.-% vorhandener Ester aus einem mehrwertigen Alkohol und mindestens einer Fettsäure,
Komponente (C2) ein mit y Gew.-% vorhandener teilverseifter Ester eines mehrwertigen Alkohols und mindestens einer Fettsäure ist, wobei x größer als 0,01 Gew.-%, y kleiner als 0,99 Gew.-% und die Summe aus x und y kleiner als 1,0 Gew.-% ist,
Komponente (D) 0,0 bis 0,5 Gew.-% eines Metallsalzes einer Fettsäure, und gegebenenfalls zusätzlich die Komponenten (E) bis (I), wobei
Komponente (E) ein Metallsalz einer kurzkettigen Carbonsäure,
Komponente (F) eine sterisch gehinderte Phenolverbindung,
Komponente (G) ein Stabilisator aus der Gruppe der Benzotriazolderivate oder Benzophenonderivate oder aromatische Benzoatderivate,
Komponente (H) ein sterisch gehindertes Amin zur Lichtstabilisierung (HALS), und
Komponente (I) Polyoxymethylen-Polymer, bedeutet.

22. Eingefärbte Polyoxymethylen-Formmasse nach Anspruch 21 enthaltend bis 0,5 Gew.-% Komponente (D).

23. Eingefärbte Polyoxymethylen-Formmasse nach Anspruch 21 oder 22, wobei x 0,01 bis 1 Gew.-% und y 0,01 bis 0.99 Gew.-% beträgt.

24. Eingefärbte Polyoxymethylen-Formmasse nach einem oder mehreren der Ansprüche 21 bis 23, wobei x 0,1 bis 0,5 Gew.-% und y 0,1 bis 0,5 Gew.-% beträgt.

25. Eingefärbte Polyoxymethylen-Formmasse nach einem oder mehreren der Ansprüche 21 bis 24, wobei die in Komponente (C1) und/oder (C2) verwendete Fettsäure 10 bis 32 Kohlenstoffatome und/oder die verwendeten mehrwertigen Alkohole 2 bis 8 Kohlenstoffatome besitzt.

26. Eingefärbte Polyoxymethylen-Formmasse nach einem oder mehreren der Ansprüche 21 bis 25, wobei die in Komponente (C1) und/oder (C2) verwendete Fettsäure Montansäure ist oder eine Fettsäure, die 24 bis 32 Kohlenstoffatome besitzt und/oder die verwendeten mehrwertigen Alkohole ausgewählt sind aus Ethylenglykol, Glycerin, Butylenglykol, Pentaerythritol oder 2 bis 5 Kohlenstoff atome besitzen und/oder als Metallionen in der Komponente (C2) Alkalimetallionen, Erdalkalimetallionen oder andere ein- oder zweiwertige Metallionen verwendet werden.

27. Eingefärbte Polyoxymethylen-Formmasse nach einem oder mehreren der Ansprüche 21 bis 26, wobei die Komponente (C1) ein Diester aus Glykol oder Glycerin und Montansäure ist (Licowachs E, Licolub WE4, Hersteller Clariant AG) und/oder die Komponente (C2) ein teilverseifter Ester aus Butylenglykol und Montansäuren ist, dessen überschüssige Montansäureeeinheiten mit Calciumhydroxid verseift sind (Licowachs OP).

28. Verfahren zur Verringerung von Oberflächendefekten und/oder Emissionsreduktion und/oder Farbstabilisierung von Polyacetalformmassen, **dadurch gekennzeichnet, daß** eine Formmasse nach einem oder mehreren der Ansprüche 1 bis 27 verwendet wird.

29. Verfahren zur Emissionsreduktion von Polyacetalformmassen nach Anspruch 28, wobei die Emission von Formaldehyd reduziert wird.

30. Verwendung einer Formmasse nach einem oder mehreren der Ansprüche 1 bis 27 zur Herstellung von Formkörpern und Folien.

31. Formkörper mit verringerter Emission und/oder defektfreier Oberfläche und/oder hoher Farbstabilität enthaltend eine Formmasse nach einem oder mehreren der Ansprüche 1 bis 27.

## Claims

1. A colored polyoxymethylene molding composition comprising
component (A) from 0.1 to 5.0% by weight of colorant,
component (B) from 0.01 to 0.5% by weight of a nitrogen-containing stabilizer,
component (C) from 0.05 to 1% by weight of an ester of a polyhydric alcohol and at least one fatty acid,
component (D) from 0.001 to 0.5% by weight of a metal salt of a fatty acid, and
component (E) up to 1.0% by weight of a metal salt of a short-chain carboxylic acid,
component (F) up to 1.0% by weight of a sterically hindered phenol compound,
component (G) up to 1.0% by weight of at least one stabilizer from the group consisting of the benzotriazole derivatives, or that of the benzophenone derivatives, or that of the aromatic benzoate derivatives,
component (H) up to 0.5% by weight of a sterically hindered amine (HALS) as a light stabilizer,
component (I) polyoxymethylene polymer and, where appropriate, up to 40% by weight of other conventional additives, but where the molding composition does not comprise hydroxides or alkoxides of alkali metals or alkaline earth metals, or their salts with inorganic acids.

2. A colored polyoxymethylene molding composition as claimed in claim 1, which comprises
component (A) from 0.5 to 2.0% by weight,
component (B) from 0.03 to 0.3% by weight,
component (C) from 0.1 to 0.5% by weight, and
component (D) from 0.01 to 0.2% by weight.

3. The colored polyoxymethylene molding composition as claimed in claim 1 or 2, which comprises from 0.01 to 0.1% by weight of component (D).

4. The colored polyoxymethylene molding composition as claimed in one or more of claims 1 to 3, comprising
component (E) 0.01-0.05% by weight,
component (F) up to 0.4% by weight,
component (G) 0.01-0.9% by weight, and
component (H) 0.01-0.4% by weight.

5. The colored polyoxymethylene molding composition as claimed in one or more of claims 1 to 4, comprising
component (E) 0.05-0.2% by weight,
component (F) up to 0.1 % by weight,
component (G) 0.02-0.8% by weight, and
component (H) 0.4% by weight.

6. The colored polyoxymethylene molding composition as claimed in one or more of claims 1 to 5, wherein the colorant used, component (A), comprises inorganic pigments, such as titanium dioxide, ultramarine blue, or cobalt blue, organic pigments and colors, such as phthalocyanines or anthraquinones, or carbon black, either individually or as a mixture, or together with polymer-soluble dyes.

7. The colored polyoxymethylene molding composition as claimed in one or more of claims 1 to 6, where the nitrogen-containing stabilizer used, component (B), comprises: heterocyclic compounds having at least one nitrogen atom as heteroatom, adjacent to which is either an amino-substituted carbon atom or a carbonyl group, pyridazine, pyrimidine, pyrazine, pyrrolidone, aminopyridine and compounds derived therefrom, melamine, 2,6-diaminopyridine, substituted and dimeric aminopyridines, melamine-formaldehyde condensates, polyamides, dicyandiamide, urea and its derivatives, pyrrolidone and compounds derived therefrom, imidazolidinone and compounds derived therefrom, hydantoin and its derivatives, allantoin and its derivatives and mixtures prepared from these compounds.

8. The colored polyoxymethylene molding composition as claimed in one or more of claims 1 to 7, where the nitrogen-containing stabilizer used, component (B), comprises melamine, methylolmelamine, melamine-formaldehyde condensates or allantoin, individually or as a mixture made from two or more of the abovementioned compounds.

9. The colored polyoxymethylene molding composition as claimed in one or more of claims 1 to 8, where the ester of a polyhydric alcohol and at least one fatty acid, component (C), is an ester of a higher fatty acid having from 10 to 32 carbon atoms and a polyhydric alcohol having from 2 to 8 carbon atoms.

10. The colored polyoxymethylene molding composition as claimed in one or more of claims 1 to 9, where the ester of a polyhydric alcohol and at least one fatty acid, component (C), is an ester of a higher fatty acid having from 24 to 32 carbon atoms and a polyhydric alcohol having from 2 to 5 carbon atoms.

11. The colored polyoxymethylene molding composition as claimed in one or more of claims 1 to 10, where the ester of a polyhydric alcohol and at least one fatty acid, component (C), is a montanic ester, and/or a fatty acid ester with ethylene glycol, glycerol, butylene glycol or pentaerythritol as alcohol component.

12. The colored polyoxymethylene molding composition as claimed in one or more of claims 1 to 11, where the ester of a polyhydric alcohol and at least one fatty acid, component (C), is a diester of glycol or glycerol and montanic acid.

13. The colored polyoxymethylene molding composition as claimed in one or more of claims 1 to 12, where the metal salt of a fatty acid, component (D), is an alkali metal salt, alkaline earth metal salt, or a salt of another bivalent metal ion with a saturated and/or unsaturated fatty acid having from 10 to 32 carbon atoms, for example stearate, laurate, oleate, behenate, montanate, or palmitate.

14. The colored polyoxymethylene molding composition as claimed in one or more of claims 1 to 13, where the metal salt of a fatty acid, component (D), is a beryllium, magnesium, calcium, strontium, barium or zinc salt of stearic acid or of montanic acid.

15. The colored polyoxymethylene molding composition as claimed in one or more of claims 1 to 14, where the metal salt of a short-chain carboxylic acid, component (E), is a propionate, citrate or pyruvate, or a salt of another carboxylic acid having from 3 to 8 carbon atoms, and a salt with alkali metals or with alkaline earth metals or with other mono- or bivalent metal ions.

16. The colored polyoxymethylene molding composition as claimed in one or more of claims 1 to 15, where calcium citrate is used as metal salt of a short-chain carboxylic acid, component (E).

17. The colored polyoxymethylene molding composition as claimed in one or more of claims 1 to 16, where the sterically hindered phenol compound used, component (F), comprises pentaerythrityl tetrakis[3-(3,5-di-tert-butyl-4-hydroxyphenyl)propionate] (Irganox 1010, Ciba Geigy), triethylene glycol bis[3-(3-tert-butyl-4-hydroxy-5-methylphenyl)propionate] (Irganox 245, Ciba Geigy), 3,3'-bis[3-(3,5-di-tert-butyl-4-hydroxyphenyl)propionohydrazide] (Irganox MD 1024, Ciba Geigy), hexamethylene glycol bis[3-(3,5-di-tert-butyl-4-hydroxyphenyl)propionate] (Irganox 259, Ciba Geigy), or 3,5-di-tert-butyl-4-hydroxytoluene (Lowinox BHT, Great Lakes).

18. The colored polyoxymethylene molding composition as claimed in one or more of claims 1 to 17, where the stabilizer selected from the group consisting of the benzotriazole derivatives, or that of the benzophenone derivatives, or that of the aromatic benzoate derivatives, component (G), comprises 2-[2'-hydroxy-3',5'-bis(1,1-dimethylbenzyl)phenyl]benzotriazole (Tinuvin 234).

19. The colored polyoxymethylene molding composition as claimed in one or more of claims 1 to 18, where the sterically hindered amine used as light stabilizer, component (H), comprises 2,2,6,6-tetramethyl-4-piperidyl compounds, in particular bis(2,2,6,6-tetramethyl-4-piperidyl) sebacate (Tinuvin 770) or the polymer made from dimethyl succinate and 1-(2-hydroxyethyl)-4-hydroxy-2,2,6,6-tetramethyl-4-piperidine (Tinuvin 622).

20. The colored polyoxymethylene molding composition as claimed in one or more of claims 1 to 19, comprising up to 40% by weight of further additives selected from the group consisting of one or more of the following substances: nucleating agents, such as polyoxymethylene terpolymers or talc, fillers, such as glass beads, wollastonite, loam, molybdenum disulfide or graphite, inorganic or organic fibers, such as glass fibers, carbon fibers or aramid fibers, glass fibers with a length of >3 mm, thermoplastic or thermoset polymeric additives, or elastomers, such as polyethylene, polyurethane, polymethyl methacrylate, polybutadiene, or polystyrene, or else graft copolymers whose core has been prepared by polymerizing 1,3-butadiene, isoprene, n-butyl acrylate, ethylhexyl acrylate, or mixtures of these, and whose shell has been prepared by polymerizing styrene, acrylonitrile or (meth)acrylates.

21. A colored polyoxymethylene molding composition comprising
component (A) from 0.1 to 5.0% by weight of colorant,
component (B) from 0.01 to 0.5% by weight of a nitrogen-containing stabilizer,
component (C1) x% by weight of an ester of a polyhydric alcohol and at least one fatty acid,
component (C2) y% by weight of a partially hydrolyzed ester of a polyhydric alcohol and at least one fatty acid, x being greater than 0.01% by weight, y being smaller than 0.99% by weight, and the sum of x and y being smaller than 1.0% by weight,
component (D) from 0.0 to 0.5% by weight of a metal salt of a fatty acid, and
if desired, additionally, components (E) to (I); with
component (E) being a metal salt of a short-chain carboxylic acid,
component (F) being a sterically hindered phenol compound,
component (G) being a stabilizer from the group of benzotriazole derivatives or benzophenone derivatives or aromatic benzoate derivatives,
component (H) being a sterically hindered amine for light stabilization (HALS),
and component (I) being a polyoxymethylene polymer.

22. The colored polyoxymethylene molding composition as claimed in claim 21, comprising up to 0.5% by weight of component (D).

23. The colored polyoxymethylene molding composition as claimed in claim 21 or 22, where x is from 0.01 to 1% by weight, and y is from 0.01 to 0.99% by weight.

24. The colored polyoxymethylene molding composition as claimed in one or more of claims 21 to 23, where x is from 0.1 to 0.5% by weight, and y is from 0.1 to 0.5% by weight.

25. The colored polyoxymethylene molding composition as claimed in one or more of claims 21 to 24, where the fatty acid used in component (C1) and/or (C2) has from 10 to 32 carbon atoms and/or the polyhydric alcohols used have from 2 to 8 carbon atoms.

26. The colored polyoxymethylene molding composition as claimed in one or more of claims 21 to 25, where the fatty acid used in component (C1) and/or (C2) is montanic acid or is a fatty acid which has from 24 to 32 carbon atoms, and/or the polyhydric alcohols used have been selected from the group consisting of ethylene glycol, glycerol, butylene glycol and pentaerythritol, or have from 2 to 5 carbon atoms, and/or the metal ions used in component (C2) are alkali metal ions, alkaline earth metal ions, or other mono- or bivalent metal ions.

27. The colored polyoxymethylene molding composition as claimed in one or more of claims 21 to 26, where component (C1) is a diester of glycol or glycerol and montanic acid (Licowachs E, Licolub WE4, manufacturer Clariant AG) and/or component (C2) is a partially hydrolyzed ester of butylene glycol and montanic acids whose excess montanic acid moieties have been saponified using calcium hydroxide (Licowachs OP).

28. A process for reducing the number of surface defects and/or for emission reduction and/or for color stabilization in polyacetal molding compositions, which comprises using a molding composition as claimed in one or more of claims 1 to 27.

29. The process for emission reduction in polyacetal molding compositions as claimed in claim 28, where emission of formaldehyde is reduced.

30. The use of a molding composition as claimed in one or more of claims 1 to 27 for producing moldings and films.

31. A molding with reduced emission and/or with a defect-free surface and/or with high color fastness, comprising a molding composition as claimed in one or more of claims 1 to 27.

## Revendications

1. Masse de moulage colorée en polyoxyméthylène, comprenant
le composant (A), à raison de 0,1 à 5,0 % en poids de colorant,
le composant (B), à raison de 0,01 à 0,5 % en poids d'un agent de stabilisation contenant de l'azote,
le composant (C), à raison de 0,05 à 1 % en poids d'un ester d'un alcool polyhydrique et d'au moins un acide gras,
le composant (D), à raison de 0,001 à 0,5 % en poids d'un sel métallique d'un acide gras,
le composant (E), allant jusqu'à 1,0 % en poids d'un sel métallique d'un acide carboxylique à chaîne courte,
le composant (F), allant jusqu'à 1,0 % en poids d'un composé phénolique à empêchement stérique,
le composant (G), allant jusqu'à 1,0 % en poids d'au moins un agent de stabilisation choisi parmi le groupe des dérivés du benzotriazole ou des dérivés de la benzophénone ou des dérivés aromatiques des benzoates,
le composant (H), allant jusqu'à 0,5 % en poids d'une amine à empêchement stérique en vue de la stabilisation vis-à-vis de la lumière (HALS),
le composant (I), à savoir un polymère de polyoxyméthylène, et
le cas échéant, jusqu'à 40 % en poids d'additifs usuels supplémentaires,
sans que la masse de moulage ne contienne toutefois ni hydroxyde ni alcoxyde des métaux alcalins ou des métaux alcalino-terreux ou de leurs sels avec des acides inorganiques.

2. Masse de moulage colorée en polyoxyméthylène selon la revendication 1, **caractérisée en ce qu'**elle contient
le composant (A), à raison de 0,5 à 2,0 % en poids,
le composant (B), à raison de 0,03 à 0,3 % en poids,
le composant (C), à raison de 0,1 à 0,5 % en poids, et
le composant (D), à raison de 0,01 bis 0,2 % en poids.

3. Masse de moulage colorée en polyoxyméthylène selon la revendication 1 ou 2, **caractérisée en ce qu'**elle contient de 0,01 à 0,1 % en poids du composant (D).

4. Masse de moulage colorée en polyoxyméthylène selon l'une ou plusieurs des revendications 1 à 3, contenant
le composant (E), à raison de 0,01 - 0,05 % en poids,
le composant (F), allant jusqu'à 0,4 % en poids,
le composant (G), à raison de 0,01 - 0,8 % en poids et
le composant (H), à raison de 0,01 - 0,4 % en poids.

5. Masse de moulage colorée en polyoxyméthylène selon l'une ou plusieurs des revendications 1 à 4, contenant
le composant (E) à raison de 0,05 - 0,2 % en poids,
le composant (F), allant jusqu'à 0,1 % en poids,
le composant (G), à raison de 0,02 - 0,8% en poids, et
le composant (H), à raison de 0,4 % en poids.

6. Masse de moulage colorée en polyoxyméthylène selon l'une ou plusieurs des revendications 1 à 5, étant donné que l'on utilise, en tant que colorant, le composant (A), des pigments inorganiques, comme le dioxyde de titane, le pigment bleu outremer, le bleu de cobalt, des pigments et des couleurs organiques, comme la phtalocyanine, l'anthraquinone ou le noir de fumée, soit individuellement, soit en tant que mélange ou conjointement à des substances colorantes solubles dans des polymères.

7. Masse de moulage colorée en polyoxyméthylène selon l'une ou plusieurs des revendications 1 à 6, étant donné qu'en tant qu'agent de stabilisation contenant de l'azote, l'on utilise le composant (B): des composés hétérocycliques ayant au moins un atome d'azote en tant qu'hétéroatome, qui est voisin soit d'un atome de carbone amino-substitué, soit d'un groupement carbonyle, la pyridazine, la pyrimidine, la pyrazine, la pyrrolidone, l'aminopyridine et des composés qui en dérivent, la mélamine, la 2,6-diaminopyridine, des aminopyridines substituées et dimères, des condensats mélamine-formaldéhyde, des polyamides, le dicyandiamide, l'urée et ses dérivés, la pyrrolidone et les composés qui en dérivent, l'imidazolidinone et les composés qui en dérivent, l'hydantoïne et ses dérivés, l'allantoïne et ses dérivés et les mélanges obtenus à partir de ces composés.

8. Masse de moulage colorée en polyoxyméthylène selon l'une ou plusieurs des revendications 1 à 7, le composant (B), la mélamine, la méthylolamine, les condensats mélamine-formaldéhyde ou l'allantoïne, étant utilisés en tant qu'agent de stabilisation contenant de l'azote, individuellement ou en tant que mélange de plusieurs des composés suscités.

9. Masse de moulage colorée en polyoxyméthylène selon l'une ou plusieurs des revendications 1 à 8, l'ester venant d'un alcool polyhydrique et d'au moins un acide gras, le composant (C), étant un ester d'un acide gras supérieur, ayant de 10 à 32 atomes de carbone, et d'un alcool polyhydrique, ayant de 2 à 8 atomes de carbone.

10. Masse de moulage colorée en polyoxyméthylène selon l'une ou plusieurs des revendications 1 à 9, l'ester venant d'un alcool polyhydrique et d'au moins un acide gras, le composant (C), étant un ester d'un acide gras supérieur, ayant de 24 à 32 atomes de carbone, et d'un alcool polyhydrique, ayant de 2 à 5 atomes de carbone.

11. Masse de moulage colorée en polyoxyméthylène selon l'une ou plusieurs des revendications 1 à 10, l'ester venant d'un alcool polyhydrique et d'au moins un acide gras, le composant (C), étant un ester de l'acide montanique et/ou un ester d'acide gras avec l'éthylèneglycol, la glycorine, le butylèneglycol ou le pentaérythritol en tant que composant alcoolique.

12. Masse de moulage colorée en polyoxyméthylène selon l'une ou plusieurs des revendications 1 à 11, l'ester venant d'un alcool polyhydrique et d'au moins un acide gras, le composant (C), étant un diester du glycol ou de la glycérine et de l'acide montanique.

13. Masse de moulage colorée en polyoxyméthylène selon l'une ou plusieurs des revendications 1 à 12, le sel métallique d'un acide gras, le composant (D), étant un sel de métal alcalin, un sel de métal alcalino-terreux ou un sel d'un autre ion métallique divalent d'un acide gras saturé et/ou insaturé, ayant de 10 à 32 atomes de carbone, comme le stéarate, le laurate, l'oléate, le béhénate, le montanate, le palmitate.

14. Masse de moulage colorée en polyoxyméthylène selon l'une ou plusieurs des revendications 1 à 13, le sel métallique d'un acide gras, le composant (D), étant un sel de béryllium, de magnésium, de calcium, de strontium, de baryum ou de zinc de l'acide stéarique ou de l'acide montanique.

15. Masse de moulage colorée en polyoxyméthylène selon l'une ou plusieurs des revendications 1 à 14, le sel métallique d'un acide carboxylique à chaîne courte, le composant (E), étant un propionate, un citrate ou un pyruvate ou un sel d'un autre acide carboxylique, ayant de 3 à 8 atomes de carbone, et un sel avec des métaux alcalins ou alcalino-terreux ou d'autres ions métalliques monovalents ou divalents.

16. Masse de moulage colorée en polyoxyméthylène selon l'une ou plusieurs des revendications 1 à 15, le composant (E), le citrate de calcium étant utilisé en tant que sel métallique d'un acide carboxylique à chaîne courte.

17. Masse de moulage colorée en polyoxyméthylène selon l'une ou plusieurs des revendications 1 à 16, étant donné que l'on utilise, en tant que composé phénolique à empêchement stérique, le composant (F), le tétrakis-[3-(3,5-di-tert.-butyl-4-hydroxyphényl)-propionate] de pentaérythritol (produit Irganox 1010, société Ciba Geigy), le bis-[3-(3-tert.-butyl-4-hydroxy-5-méthylphényl)-propionate] de triéthylèneglycol (produit Irganox 245, société Ciba Geigy), le 3,3'-bis[3-(3,5-di-tert.-butyl-4-hydroxyphényl)-propionohydrazide] (produit Irganox MD 1024, société Ciba Geigy), le bis-[3-(3,5-ditert.butyl-4-hydroxyphényl)-propionate] d'hexaméthylèneglycol (produit Irganox 259, société Ciba Geigy), le 3,5-ditert.-butyl-4-hydroxytoluène (produit Lowinox BHT, société Great Lakes).

18. Masse de moulage colorée en polyoxyméthylène selon l'une ou plusieurs des revendications 1 à 17, étant donné que l'on utilise en tant qu'agent de stabilisation choisi parmi le groupe des dérivés du benzotriazole ou des dérivés de la benzophénone ou des dérivés aromatiques des benzoates, le composant (G), le 2-[2'-hydroxy-3',5'-bis(1,1-diméthylbenzyl)phényl]-benzotriazol (produit Tinuvin 234).

19. Masse de moulage colorée en polyoxyméthylène selon l'une ou plusieurs des revendications 1 à 18, étant donné que l'on utilise, en tant qu'amine à empêchement stérique en vue de la stabilisation vis-à-vis de la lumière, le composant (H), des composés de 2,2,6,6-tétraméthyl-4-pipéridyle, en particulier le sébacate de bis-(2,2,6,6-tétraméthyl-4-pipéridyle) (produit Tinuvin 770) ou le polymère fait de l'ester diméthylique de l'acide succinique et de la 1-(2-hydroxyéthyl)-4-hydroxy-2,2,6,6-tétraméthyl-4-pipéridine (produit Tinuvin 622).

20. Masse de moulage colorée en polyoxyméthylène selon l'une ou plusieurs des revendications 1 à 19, comprenant jusqu'à 40 % en poids d'additifs supplémentaires sélectionnés parmi une ou plusieurs des substances suivantes: des agents de nucléation, comme les terpolymères du polyoxyméthylène ou le talc, des charges, comme des billes de verre, la wollastonite, l'argile, le sulfure de molybdène ou le graphite, des fibres inorganiques ou organiques, comme des fibres de verre, des fibres de carbone ou des fibres d'aramide, des fibres de verre ayant une longueur de > 3 mm, des additifs synthétiques thermoplastiques ou duroplastiques ou des élastomères, comme le polyéthylène, le polyuréthanne, le polyméthylméthacrylate, le polybutadiène, le polystyrène ou également des polymères de greffage, dont le noyau a été préparée par la polymérisation du buta-1,3-diène, de l'isoprène, de l'acrylate de n-butyle, de l'acrylate d'éthylhexyle ou de leurs mélanges et dont l'enveloppe a été préparée par la polymérisation du styrène, de l'acrylonitrile ou de (méth)acrylates.

21. Masse de moulage colorée en polyoxyméthylène, contenant
le composant (A), à raison de 0,1 à 5,0 % en poids de
colorant,
le composant (B), à raison de 0,01 à 0,5 % en poids d'un agent de stabilisation contenant de l'azote,
le composant (Cl), un ester, présent à raison de x % en poids, d'un alcool polyhydrique et d'au moins un acide gras,
le composant (C2), un ester partiellement saponifié, présent à raison de y % en poids, d'un alcool polyhydrique et d'au moins un acide gras, x étant supérieur à 0,01 % en poids, y étant inférieur à 0,99 % en poids et la somme de x et de y étant inférieure à 1,0 % en poids,
le composant (D) allant jusqu'à 0,5 % en poids d'un sel métallique d'un acide gras, et, le cas échéant, en sus les composants (E) à (I),
le composant (E) étant un sel métallique d'un acide carboxylique à chaîne courte,
le composant (F) étant un composé phénolique à empêchement stérique,
le composant (G) étant un agent de stabilisation choisi parmi le groupe des dérivés du benzotriazole ou des dérivés de la benzophénone ou des dérivés aromatiques des benzoates,
le composant (H) étant une amine à empêchement stérique en vue de la stabilisation vis-à-vis de la lumière (HALS) et
le composant (I) étant un polymère du polyoxyméthylène.

22. Masse de moulage colorée en polyoxyméthylène selon la revendication 21, contenant jusqu'à 0,5 % en poids du composant (D).

23. Masse de moulage colorée en polyoxyméthylène selon la revendication 21 ou 22, x étant de 0,01 à 1 % en poids et y étant de 0,01 à 0,99 % en poids.

24. Masse de moulage colorée en polyoxyméthylène selon l'une ou plusieurs des revendications 21 à 23, x étant de 0,1 à 0,5 % en poids et y étant de 0,1 à 0,5 % en poids.

25. Masse de moulage colorée en polyoxyméthylène selon l'une ou plusieurs des revendications 21 à 24, l'acide gras utilisé dans le composant (C1) et/ou (C2) possédant de 10 à 32 atomes de carbone et les alcools polyhydriques utilisés possédant de 2 à 8 atomes de carbone.

26. Masse de moulage colorée en polyoxyméthylène selon l'une ou plusieurs des revendications 21 à 25, l'acide gras utilisé dans le composant (C1) et/ou (C2) étant l'acide montanique ou un acide gras, qui possède de 24 à 32 atomes de carbone et/ou les alcools polyhydriques utilisés étant sélectionnés parmi l'éthylèneglycol, la glycérine, le butylèneglycol, le pentaérythritol ou possédant de 2 à 5 atomes de carbone et/ou des ions de métaux alcalins, des ions de métaux alcalino-terreux ou d'autres ions métalliques univalents ou divalents étant utilisés en tant qu'ions métalliques dans le composant (C2).

27. Masse de moulage colorée en polyoxyméthylène selon l'une ou plusieurs des revendications 21 à 26, le composant (C1) étant un diester du glycol ou de la glycérine et de l'acide montanique (produit Licowachs E, produit Licolub WE4, fabricant Clariant AG) et/ou le composant (C2) étant un ester partiellement saponifié du butylèneglycol et des acides montaniques, dont les unités d'acide montanique en excès sont saponifiées à l'aide d'hydroxyde de calcium (produit Licowachs OP).

28. Procédé en vue de la diminution des défauts superficiels et/ou de la réduction d'émission et/ou de la stabilisation des couleurs de masses de moulage de polyacétal, **caractérisé en ce que** l'on utilise une masse de moulage selon l'une ou plusieurs des revendications 1 à 27.

29. Procédé en vue de la réduction d'émission de masses de moulage de polyacétal selon la revendication 28, l'émission de formaldéhyde étant réduite.

30. Utilisation d'une masse de moulage selon l'une ou plusieurs des revendications 1 à 27 en vue de la fabrication de corps moulés et de feuilles.

31. Corps moulé ayant une émission réduite et/ou une surface exempte de défauts et/ou une stabilité de couleur élevée, contenant une masse de moulage selon l'une ou plusieurs des revendications 1 à 27.
